# EUROPEAN PATENT APPLICATION

(11) **EP 2 979 991 A1**
(43) Date of publication of application: **03.02.2016**
(21) Application number: 14179381.0
(22) Date of filing: 31.07.2014
(51) Int. Cl.: B65D 77/04, B32B 5/18, B32B 5/22, B32B 5/24, B32B 5/26, B32B 5/30, B32B 5/32, B32B 15/04, B32B 15/18, B32B 15/20, B32B 1/02, B32B 1/04

(54) **Multilayer material, fire protection mat with said multilayer material and transport and storage container assembly comprising said fire protection mat.**

(71) Applicant: Greif International Holding B.V., 3633 AK Vreeland (NL)
(72) Inventor: Barion, Guido, 24010 Sorisole (BG) (IT)
(74) Representative: Bonvicini, Davide

(57) **Abstract**

A multilayer material comprises a first heat insulation support layer (10) comprising a material containing an aerogel, said heat insulation support layer (10) having a first inner surface (10a) and a first outer surface (10b), a second flame barrier layer (20) comprising a ceramic foam, said second flame barrier layer (20) having a second inner surface (20a) and a second outer surface (20b), said second inner surface (20a) being firmly coupled with said first outer surface (10b), and a third electrostatic discharge layer (30) consisting of a material with surface electric resistance lower than 10¹¹ Ω, said third electrostatic discharge layer (30) having a third inner surface (30a) and a third outer surface (30b), said third inner surface (30a) being firmly coupled with said second outer surface (20b). A fire protection mat (1) comprises said multilayer material. A transport and storage container assembly (100) comprises a pallet (2), an inner container (3) arranged on said pallet (2), an outer casing (4) arranged on said pallet (2) and surrounding laterally said inner container (3) and said fire protection mat (1) arranged between said inner container (3) and said outer casing (4) and between said inner container (3) and said pallet (2),

## Description

### Field of the invention

The present invention relates to a multilayer material, to a fire protection mat comprising said multilayer material and to a transport and storage container assembly comprising said fire protection mat.

### Background of the invention

An Intermediate bulk container (IBC), or IBC Tote or Pallet Tank, is a reusable industrial container designed for the transport and storage of bulk liquid and granulate substances (e.g. chemicals, food ingredients, solvents, pharmaceuticals, etc.). IBCs are stackable containers mounted on a pallet, which are designed to be moved using a forklift or a pallet jack. IBCs have a volume range that is situated between drums and tanks, hence the term "intermediate".

The most common sizes are 1040 litre/275 gallons and 1250 litre/330 gallons (the 1040 litre IBCs are often listed as being 1000 litres). Cube-shaped IBCs give a particularly good utilization of storage capacity compared to palletized drums - one 275 gallon IBC is equivalent to five 55 gallon drums, and a 330 gallon IBC is equivalent to six 55 gallon drums.

The most common IBC is the one-time use plastic composite IBC; a white/translucent plastic container (typically polyethylene) housed within a tubular galvanized iron cage that is attached to a pallet. IBCs can be manufactured out of a number of materials depending upon the needs of the shipper and the legal requirements that must be met. In addition to the plastic composite IBC, intermediate bulk containers are also manufactured out of fiberboard, wood, heavy gauge plastic, aluminium, carbon steel, and galvanized iron. Folding IBCs are made of heavy plastic, however, their sides fold inward when the unit is empty allowing the IBC to collapse into a much smaller package for return shipment or storage. Flexible intermediate bulk containers, made of woven polyethylene or polypropylene bags, are designed for storing or transporting dry, flowable products, such as sand, fertilizer, and granules of plastic. Almost all rigid IBCs are designed so they can be stacked vertically one on top of the other using a forklift. Most have a built-in tap (valve, spigot, or faucet) at the base of the container to which hoses can be attached, or through which the contents can be poured out into smaller containers.

Due to safety reasons and to insurance company demands, it is required that the IBCs meet, in addition to the UN dangerous goods transportation, rigid regulatory standards regarding antistatic and fire-proof behaviour. This is particularly important for the shipment and storage of flammable and combustible liquids, as plastic IBCs containing combustible or flammable liquids may melt or burn rapidly, releasing their contents when exposed to a fire, increasing the fire hazard by the sudden addition of combustible or flammable material in the pool fire created by the contents released by the IBC.

When composite IBCs containing combustible or flammable liquids are stored together in warehouses or other facilities, they can cause dangerous pool fires.

When IBCs containing flammable or combustible liquids fail, they can release a large pool of these liquids. If ignited, the extreme heat release rates can overtax most fire sprinkler systems. This hazard exists regardless of how the IBC is constructed according to the present standards.

Composite IBCs can be easily breached, by exposure to even a small fire, and then the IBC itself contributes to the fire hazard.

Additionally, once the unit is emptied, the composite may ignite and contribute to the liquid pool. Pool fires caused by composite IBCs can be catastrophic events and are capable of destroying the building where the event occurs. A spreading pool fire can also threaten adjacent buildings.

In several industrial applications, approval of packaging by an international certification organization such as Underwriters Laboratory (UL) or FM Approvals is more than welcome also if not yet mandatory. Such certification is achieved upon positive outcome of particularly severe fire-resistance tests, such as structural resistance to exposure to flame for 20-30 minutes without spillage of the content. The tests are performed in different conditions depending on the certification organisation, but always under controlled conditions. Additional information are disclosed in the Research Report RR564 "Fire performance of composite IBCs" prepared by the Health and Safety Laboratory for the Health and Safety Executive (HSE) in 2007.

Metal-clad IBCs, of the types disclosed in US 5,971,185, US2007199937 and DE10161693, display an acceptable resistance to fires. However, these containers have the drawback that the metal shield increases the overall weight, which results in increased freight costs and higher energy consumption for shipping and moving the containers within the storing facilities.

In addition, metal-clad IBCs are difficult to manufacture and to assemble, as they may comprise a number of parts (DE10161693, figure 2), which need to be individually joined by bolts and nuts.

Moreover, the metal-clad IBCs are not completely fire-proof, as the areas around the discharge valve and the sight holes are susceptible to leakages and breakage upon exposure to flames (e.g. Research Report RR564 of HSE cited above, par. 5.3 and 5.4).

An object of the present invention is to provide an IBC that meets the fire resistance requirements and is cost-effective, light and easy to build.

Another aim of the present invention is to provide an insulating material that is flexible, light and easy to manufacture and to shape according to the specific needs.

Another object of the present invention is to provide a container for transport and storage of goods, in particular of flammable or combustible liquids, that is safe, easy to produce and to assemble/disassemble and affordable also on a large scale.

### Summary of the invention

Therefore, in one aspect, the present invention provides a multilayer material comprising:
- a first heat insulation support layer comprising a material containing an aerogel, said heat insulation support layer having a first inner surface and a first outer surface,
- a second flame barrier layer comprising a ceramic foam, said second flame barrier layer having a second inner surface and a second outer surface, said second inner surface being firmly coupled with said first outer surface, and
- a third electrostatic discharge layer consisting of a material with surface electric resistance lower than 10¹¹ Ω, said third electrostatic discharge layer having a third inner surface and a third outer surface, said third inner surface being firmly coupled with said second outer surface.

In another aspect, the present invention provides a fire protection mat comprising said multilayer material.

In another aspect, the present invention provides a transport and storage container assembly comprising:
- a pallet,
- an inner container arranged on said pallet,
- an outer casing arranged on said pallet and surrounding laterally said inner container,
- a fire protection mat arranged between said inner container and said outer casing and between said inner container and said pallet,
wherein said fire protection mat comprises:
- a first heat insulation support layer having a first inner surface and a first outer surface, said first inner surface facing said inner container,
- a second flame barrier layer having a second inner surface and a second outer surface, said second inner surface facing said first outer surface, and
- a third electrostatic discharge layer having a third inner surface and a third outer surface, said third inner surface facing said second outer surface, a portion of said third outer surface facing said outer casing.

In another aspect, the present invention relates to multilayer material comprising:
- a heat insulation support layer comprising a material containing an aerogel, said heat insulation support layer having an inner surface and an outer surface,
- an electrostatic discharge layer consisting of a material with surface electric resistance lower than 10¹¹ Ω, said electrostatic discharge layer having an inner surface and an outer surface, said inner surface of the electrostatic discharge layer being firmly coupled with the outer surface of the heat insulation support layer.

### Brief description of the drawings

The present invention will now be described in more detail hereinafter with reference to the accompanying drawings, wherein some embodiments of the invention are shown. Drawings illustrating the embodiments are schematic representations.
FIG. 1 is a schematic view of a multilayer material according to one embodiment of the present invention.
FIG. 2 is a schematic view of a transport and storage container according to one embodiment of the present invention,

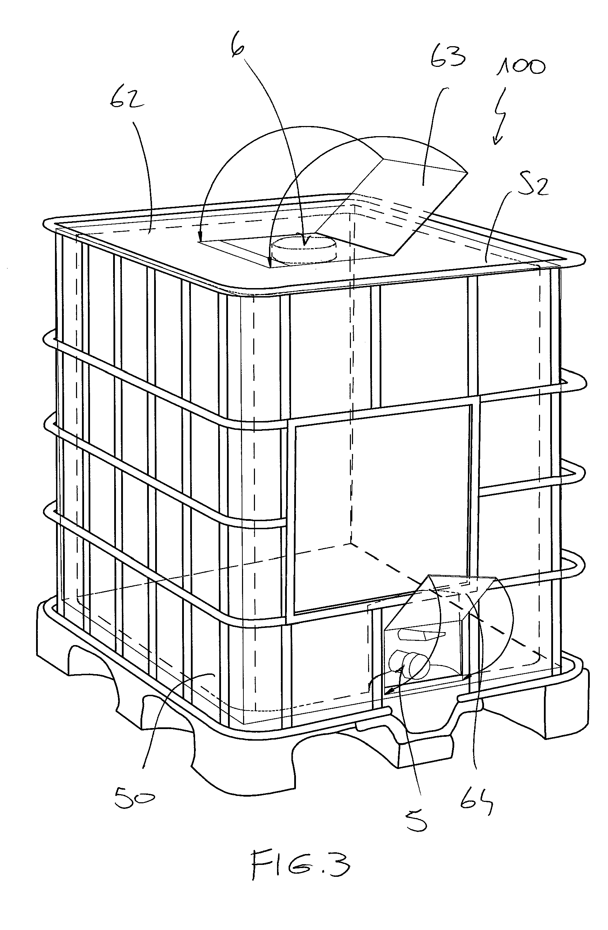

FIG. 3 is a schematic view of the transport and storage container of FIG. 2 in a different operating configuration,

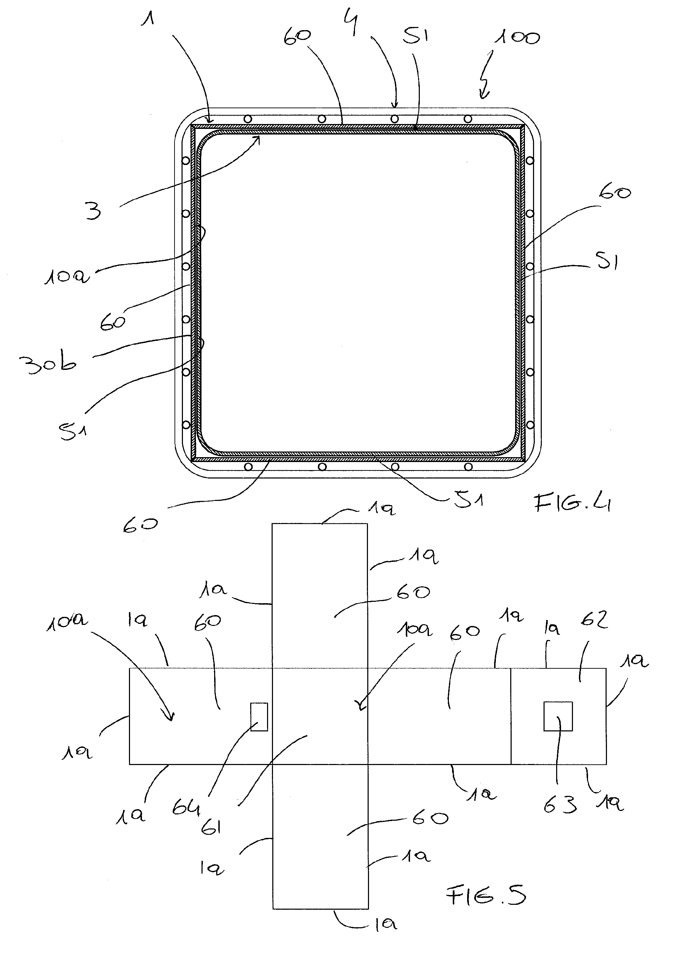

FIG. 4 is a section view of the transport and storage container of FIG. 2,
FIG. 5 is a schematic view of a fire protection mat according to one embodiment of the present invention.

### Detailed description

As used in the present invention, the term "comprises" refers to a substance, which can be present in a mixture in any percentage, i.e. up to and including 100%. In the context of the present invention, it is understood that an element or composition "comprising" a certain substance may consist of said substance or of a mixture including said substance, in addition to other substances.

As used herein, unless otherwise specified, all percentages of a component in a mixture are referred to the weight of the component with respect to the total weight of the mixture (w/w). "Multilayer assembly" as used herein means a material comprising a plurality of layers (e.g. sheets or films), made of the same or of different materials, firmly and irreversibly bound on their largest surface portions. The multilayer of the invention may comprise other layers, made of the same or of different materials, in addition to layers a), b) and c). The additional layers may be bound by the same mixture of layer b) or by other means.

As used within the context of the present invention, the term "firmly coupled layers" or "permanently coupled layer" indicate that two layers of generally different materials are firmly fixed to each other. The adhesion between the two layers may be obtained using a glue or it may be due to the inherent properties of at least one of the materials, such as in the case of deposition of a thin metal film on a different material.

As used within the context of the present invention, the term "conductive material" indicates a material having a surface resistance (R₀) value lower than 10⁴ Ohm as evaluated at 23°C +/- 2 K, 25% +/- 5% relative humidity according to IEC DTS 60079-32-1 CDV:2012, Explosive Atmospheres - Part 32-1: "Electrostatic hazards - Guidance and IEC 60079-32-2 CD:2012, Part 32-2: Electrostatics hazards - Tests (based of Cenelec TR 50404:2003, "Code of practice for the avoidance of hazards due to static electricity)*";* or to Technical Rules for Industrial Safety (TRBS) 2153:2009 "Preventing ignition hazards due to electrostatic charges*"* (also published in BG T 033: 2009, BGI 5127, Editor: Berufsgenossenschaft Rohstoffe und chemischen Industrie BG RCI, Heidelberg. According to the above methods, a material having R₀ < 10⁴ Ω is considered as "conductive", a material having 10⁴ Ω < R₀ < 10¹¹ Ω is considered as "dissipative"; a material having R₀ > 10¹¹ Ω is considered as "insulating".

As used within the context of the present invention, the term "electrostatic discharge layer" indicates a layer consisting of a material having a surface resistance R₀ lower than 10¹¹ Ohm. This electrostatic discharge layer may consist of a conductive material if R₀ < 10⁴ Ω or it may consist of a dissipative material (also referred to as "antistatic material" in the literature) if 10⁴ Ω < R₀ < 10¹¹ Ω.

In one embodiment, the present invention relates to multilayer material comprising:
- a first heat insulation support layer 10 comprising a material containing an aerogel, said heat insulation support layer 10 having a first inner surface 10a and a first outer surface 10b,
- a second flame barrier layer 20 comprising a ceramic foam, said second flame barrier layer 20 having a second inner surface 20a and a second outer surface 20b, said second inner surface 20a being firmly coupled with said first outer surface 10b, and
- a third electrostatic discharge layer 30 consisting of a material with surface electric resistance lower than 10¹¹ Ω, said third electrostatic discharge layer 30 having a third inner surface 30a and a third outer surface 30b, said third inner surface 30a being firmly coupled with said second outer surface 20b.

It was found that the material according to the invention has fire and heat insulating properties superior to the sum of the insulating effects of the single layers. Without wishing to be bound by the theory, the synergistic effect is probably related to an interaction between the aerogel and the ceramic foam layers.

The material according to the invention is relatively flexible and easy to cut and to adapt into the desired shapes, for example using a sharp blade, without needing special equipment or dedicated machinery.

An aerogel is a porous material having one of the highest level of porosity of any known solid, i.e. up to 99% and has a specific surface area of hundreds to 1500 m /g, and an ultra-low density.

The silica aerogel is the most common type of inorganic aerogel and it is generally referred to as "aerogel", although other types of aerogels have been produced, such as those based on carbon, organic compounds, alumina, chalcogens and cadmium selenides. Silica aerogel may be obtained by forming a gel, by subjecting a silica precursor solution to a sol-gel condensation reaction, and then drying the gel under supercritical conditions or ambient-pressure conditions, to yield an aerogel having a porous structure full of air. Non-limiting examples of methods for the preparation of aerogels are disclosed in US 3,794,712, US 3,819,811, EP2173659 and documents cited therein.

Due to its highly porous structure, an aerogel is prone to shattering, and thus in practical applications, the aerogel may be placed in a suitable container or ground to the state of fine particles and combined with a fabric matrix into a composite body (e.g. a mat), to be used in a commercially available product having a physically stable structure. Non limiting examples of methods for the production of such composite bodies are disclosed in KR2010/003737, WO2008051029, US 6,887,563 and references cited therein.

Preferably, in the multilayer material according to the invention, the material containing an aerogel of the first heat insulation layer 10 is a fibre matrix in the form of a mat, a fibrous batting, a blanket or a porous non-woven fabric comprising particles of the aerogel.

Preferably, in the multilayer material according to the invention, the blanket or the porous non-woven fabric of the first heat insulation layer 10 comprises glass-fibres, carbon fibres, quartz fibres, polymer fibres, mineral wool fibres, ceramic fibres or mixtures thereof.

More preferably, said material comprises a non-woven glass fibres fabric.

The material of the first heat insulation layer 10 of the present invention preferably comprises aerogel particles.

In the present invention, the content of aerogel particles is preferably within a range of 10-90 wt%, and more preferably, within a range of 30-70 wt%, on the basis of the total weight of the aerogel material. A content of aerogel particles lower than 10 wt% is undesirable, as it may cause a loss in the thermal- insulation property of the aerogel sheet. Also, if the content of aerogel particles is more than 90 wt%, this may cause a difficulty in processing and an insufficient strength of products.

In the present invention, the properties, shape, and preparation method of the aerogel particles to be charged into the needle-punched non-woven fabric are not specially limited to the above description, and any other generally known aerogel particles may be used. The generally prepared aerogel particles may have an average diameter within a range from approximately sub-micron (less than 1 micron) to several millimeters, and more preferably, within a range from approximately sub-micron to 5 mm, but not limited thereto.

The aerogel comprised in the material according to the present invention is preferably in the form of micro-particles with average diameter of 45 to 150 micron or particles with an average diameter of 1 to 2 mm.

Preferably, the aerogel particles have a density of approximately 0.01-0.5 g/cm³. It was found that the aerogel particles with density higher than 0.5 g/cm may have poor thermal insulation property.

Preferably, in the multilayer material of the present invention the aerogel in the material of the first heat insulation layer 10 is a silica aerogel. Optionally, in the material of the present invention aerogel can be functionalized or treated to reduce its hydrophilicity (that is "waterproofed"), e.g. by capping the residual silanol groups using trimethylsilyl groups or analogues (US2010233061, US2011240907 and references cited therein).

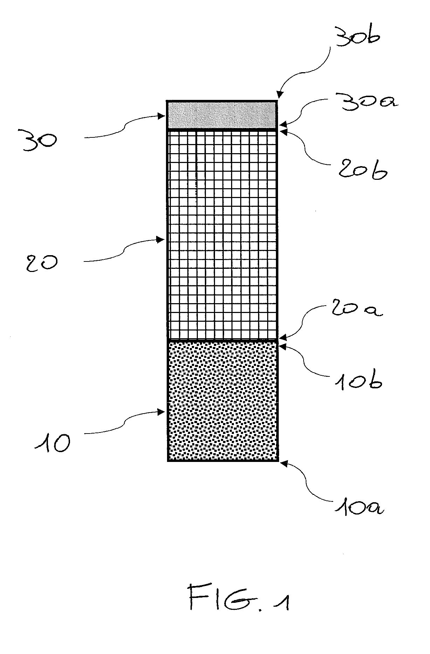

As shown in figure 1, the general structure of the material according to the present invention comprises three layers. Further layers may be added on either or both sides of the structure shown in figure 1, e.g. coupled or next to the first heat insulation support layer 10 and/or to the third electrostatic discharge layer 30.

As shown in figure 1, the surface 10b of the first heat insulation support layer 10 is permanently coupled to surface 20a of the second flame barrier layer 20 and the surface 20b second flame barrier layer 20 is permanently coupled to surface 30a of the third electrostatic discharge layer 30.

Said coupling can be effected via an adhesive such as commonly used glues that are known to the person skilled in the art, e.g. a solvent-based adhesive, a polymer dispersion adhesive, a pressure sensitive adhesive, a contact adhesive, a hot melt adhesive, a multi-part or one-part adhesives such as polyester resin, polyurethane resin, polyol resin, acrylic polymers and their combinations.

Alternatively, the first, second and third layers 10, 20, 30 of the multilayer material according to the present invention adhere to each other without the presence of any additional adhesive substance. As a non-limiting example, the first heat insulation support layer 10 may adhere to the second flame barrier layer 20 due to the stickiness of the latter, and the third electrostatic discharge layer 30 may adhere analogously to second flame barrier layer 20 or may be deposed on second flame barrier layer 20 using one of the standard deposition techniques known in the art, such as CVD (Chemical vapour deposition), ALD (atomic layer deposition) and IVD (ion vapour deposition), all of which can optionally be plasma enhanced (ED) (e.g. US2014120712 and references cited therein).

As a non-limiting example, third electrostatic discharge layer 30 may comprise, or consist of, aluminium, steel, copper, conductive plastic sheet, woven or not-woven conductive or dissipative sheet and their mixtures or alloys.

Preferably, the third electrostatic discharge layer 30 in the multilayer material according to the present invention comprises aluminium, steel or carbon black.

Ceramic foam is a lightweight structure consisting of a small percentage of very porous ceramic and a high percentage of gas-filled pores. Typical ceramic foams are 75 to 90% porous, although some are even more porous. Ceramic foams may have an open-cell or a closed-cell structure. Preferably, in the ceramic foam in the material according to the present invention at least a portion of the cells is composed of open cells. More preferably, the percentage of open cells if 10 to 90%, 20 to 50%, 25 to 40% or 25 to 30% as measured by the method known to the person skilled in the art, such as X-ray microtomography or optical methods (Shih, A.J.; Huang, Z. J Manuf Sci e-t ASME 2006, 128, 951, and references cited therein).

The ceramic foam comprised in second flame barrier layer 20 of the material according to the present invention may comprise or consist of alumina (Al₂O₃), silica (SiO₂), aluminosilicates (such as mullite), zirconia (ZrO₂), titanium oxide (TiO₄) and mixtures thereof. Preferably, the ceramic foam comprised in second flame barrier layer 20 of the material according to the present invention is a zirconia-based ceramic foam. A non-limiting example of such zirconia-based ceramic foam and of the method for its preparation is disclosed in WO0069542, WO0026157, CN101259347.

Said ceramic foam can be generated and/or applied (e.g. injected or sprayed) on the other layer(s) by standard equipment such as manual coaxial guns, pneumatic coaxial guns, nozzles for spray applications and other suitable apparatus. The process for the formation of the ceramic foam may comprise the steps of forming a stable aqueous colloidal solution of silica and oxides of alkaline metals (i); preparing a stable composition (ii.) in the form of a suspension of inorganic and/or organic particles in an organic liquid, wherein composition (ii.) contains substances which, when compositions (i) and (ii) are mixed together, destabilize the components of composition (i), forming a gel, and can form an organic polymeric mesh together with a blowing agent, mixing said compositions (i) and (ii); forming from the thus obtained mixture a porous structure in gel form, where an organic structure supports inorganic structures being formed; allowing said porous structure in gel form to solidify, to obtain a porous ceramic material, wherein an organic polymeric network (forming a minor part of the composition, for example less than 5% in weight/weight of the foam) surrounds the inorganic parts (e.g. the process disclosed in ES2372943, FR2873685 and references cited therein).

In another embodiment, the present invention relates to a fire protection mat comprising the above multilayer material. In addition to the first, second and third layers 10, 20 and 30, the mat 1 according to the present invention may comprise further layers attached or adjacent to the inner surface 10a of the first heat insulation support layer 10 and/or the outer surface 30b of third electrostatic discharge layer 30.

One of the advantages of the material according to the present invention is that it has excellent fire- and heat-insulating properties also when manufactured into very thin articles. A high performance fire protection mat with thickness around 15 mm is particularly advantageous for use in insulation of IBCs, because it fits in the cavity normally present between the actual container and the surrounding metal grid o cage. Hence, the mat according to the present invention can be used in the standard IBCs present on the market, without modifications or need to build dedicated containers.

Preferably, the fire protection mat according to the present invention has a thickness from 10 to 20 mm, more preferably from 12 to 15 mm, even more preferably fire protection mat is 14 to 16 mm thick. Within these value for the overall thickness of the mat, the thickness of the first and second layers 10 and 20 may vary so that the ratio of the relative thickness may be from 10:1 to 1:10. As a non-limiting example, the first heat insulation support layer 10 is 10 mm and the second flame barrier layer 20 is 5 mm thick.

In another embodiment, the present invention relates to a transport and storage container assembly 100 comprising:
- a pallet 2,
- an inner container 3 arranged on said pallet 2,
- an outer casing 4 arranged on said pallet 2 and surrounding laterally said inner container 3,
- a fire protection mat 1 arranged between said inner container 3 and said outer casing 4 and between said inner container 3 and said pallet 2,
wherein said fire protection mat 1 comprises:
- a first heat insulation support layer 10 having a first inner surface 10a and a first outer surface 10b, said first inner surface 10a facing said inner container 3,
- a second flame barrier layer 20 having a second inner surface 20a and a second outer surface 20b, said second inner surface 20a facing said first outer surface 10b, and
- a third electrostatic discharge layer 30 having a third inner surface 30a and a third outer surface 30b, said third inner surface 30a facing said second outer surface 30a, a portion of said third outer surface 30b facing said outer casing 4.

Preferably, in the container assembly 100 according to the present invention said second inner surface 20a is firmly coupled with said first outer surface 10b thereby said first heat insulation support layer 10 is firmly coupled with said second flame barrier layer 20.

Preferably, in the container assembly 100 according to the present invention said third inner surface 30a is firmly coupled with said second outer surface 20b by deposition or by means of an adhesive composition, thereby said second flame barrier layer 20 is firmly coupled with said third electrostatic discharge layer 30.

Preferably, in the container assembly 100 according to the present invention the thickness of the fire protection mat 1 is from 10 to 20 mm, more preferably from 12 to 16 mm, even more preferably from 14 to 16 mm or 15 mm.

Preferably, the container assembly 100 according to the invention in the shape of a stackable cube, or in a nearly-cubical stackable shape, and the fire protection mat 1 covers at least five sides of the inner container 3, more preferably, all the six sides of the inner container 3.

Preferably, the fire protection mat 1 is provided with fastening means (not shown in the figures) to fasten the sides 1a of the mat 1 to each other.

Preferably, the third electrostatic discharge layer 30 is consists of a dissipative/antistatic material having 10⁴ Ω < R₀ < 10¹¹ Ω.

More preferably, the third electrostatic discharge layer 30 consists of a conductive material having R₀ < 10⁴ Ω.

As a non-limiting example, the container assembly 100 according to the invention is a IBC wherein the fire protection mat 1 as above described is arranged between the inner container 3 and the outer casing 4 on the bottom and lateral surfaces of the inner container 3, and, optionally, also on the top surface of the inner container 3.

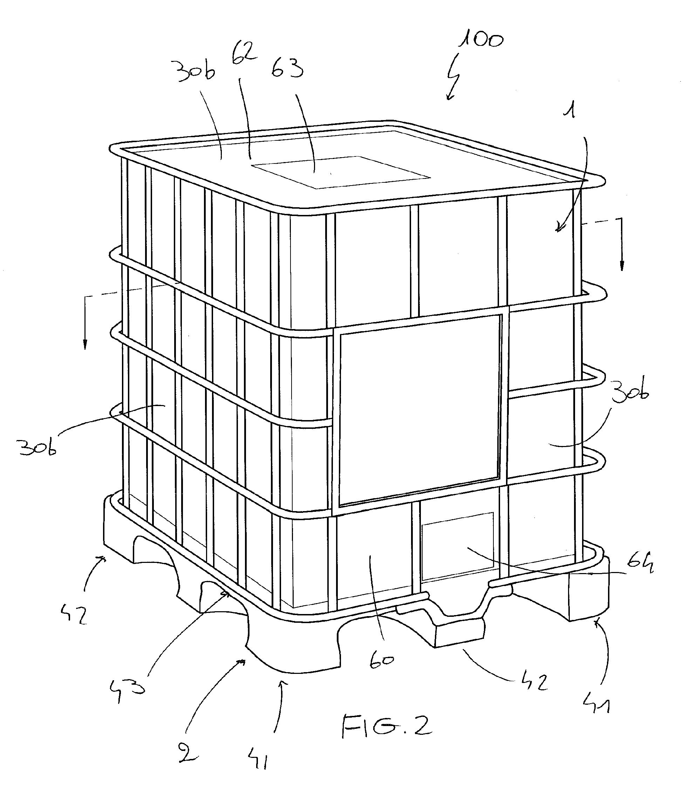

Figure 2 shows a transport and storage container assembly 100 according to one embodiment of the present invention.

The container assembly 100 comprises a pallet 2, an inner container 3, an outer casing 4 and a fire protection mat 1.

The inner container 3 comprises a discharge fitment 5 and a filling fitment 6.

The pallet 2 comprises a plurality of feet 41,42 and a support tray 43 mounted on the feet 41,42.

The plurality of feet 41, 42 comprises corner feet 41 and central feet 42.

The support tray 43 has an upper surface defining a supporting surface.

The inner container 3 is arranged on the pallet 2.

The inner container 3 comprises a base wall 50, four lateral walls 51 and a top wall 52.

The outer casing 4 is arranged on the pallet 2 and surrounds laterally the inner container 3.

The fire protection mat 1 is arranged between the inner container 3 and the outer casing 4 and the pallet 2.

In particular, the fire protection mat 1 comprises four lateral portions 60 arranged between the four lateral walls 51 of the inner container 3 and the outer casing 4 and a base portion 61 arranged between the base wall 50 of the inner container 3 and the support tray 43 of the pallet 2.

According to one embodiment, the fire protection mat 1 comprises also a top portion 62 for covering the top wall 52 of the inner container 3.

One of the lateral portions 60 comprises a part 64 at least partially removable to access to the discharge fitment 5 of the inner container 3.

The top portion 62 comprises a part 63 at least partially removable to access to the filling fitment 6 of the inner container 3.

In particular, the lateral portions 60 have the first inner surface 10a facing the lateral walls 51 of the inner container 3 and the third outer surface 30b facing the outer casing 4, the base portion 61 has the first inner surface 10a facing the base wall 50 of the inner container 3 and the third outer surface 30b facing the support tray 43 of the pallet 2 and the top portion 62 has the first inner surface 10a facing the top wall 52 of the inner container 3 and the third outer surface 30b facing, if any, the pallet of a container assembly stacked on top of it.

According to one embodiment, the thickness of the first heat insulation layer 10 ranges from 10 to 12 mm, the thickness of the second flame barrier layer 20 ranges from 0.5 to 2 mm and the thickness of the third electrostatic discharge layer 30 ranges from 0.1 µm to 10 µm.

In another embodiment, the present invention relates to multilayer material comprising:
- a heat insulation support layer comprising a material containing an aerogel, said heat insulation support layer having an inner surface and an outer surface,
- an electrostatic discharge layer consisting of a material with surface electric resistance lower than 10¹¹ Ω, said electrostatic discharge layer having an inner surface and an outer surface, said inner surface of the electrostatic discharge layer being firmly coupled with the outer surface of the heat insulation support layer. It was found that certain aerogel materials effectively display both heat insulation and flame barrier properties, so that no additional flame barrier layer is needed between the aerogel layer and the conductive layer.

While the invention has been described with reference to preferred embodiments, the description is illustrative of the invention and is not to be construed as limiting the invention.

Various modifications and applications may occur to those skilled in the art without departing from the scope of the invention as defined by the appended claims.

## Claims

1. A multilayer material comprising:
- a first heat insulation support layer (10) comprising a material containing an aerogel, said heat insulation support layer (10) having a first inner surface (10a) and a first outer surface (10b),
- a second flame barrier layer (20) comprising a ceramic foam, said second flame barrier layer (20) having a second inner surface (20a) and a second outer surface (20b), said second inner surface (20a) being firmly coupled with said first outer surface (10b), and
- a third electrostatic discharge layer (30) consisting of a material with surface electric resistance lower than 10¹¹ Ω, said third electrostatic discharge layer (30) having a third inner surface (30a) and a third outer surface (30b), said third inner surface (30a) being firmly coupled with said second outer surface (20b).

2. The multilayer material according to claim 1, wherein the aerogel in the material of the first heat insulation layer (10) is a silica aerogel.

3. The multilayer material according to claim 1 or 2, wherein the material containing an aerogel of the first heat insulation layer (10) is a fibre matrix in the form of a mat, a fibrous batting, a blanket or a porous non-woven fabric comprising particles of the aerogel.

4. The multilayer material according to claim 3, wherein the fibrous batting, the blanket or the porous non-woven fabric of said first heat insulation layer (10) comprises glass-fibres, carbon fibres, quartz fibres, polymer fibres, mineral wool fibres, ceramic fibres or mixtures thereof.

5. A fire protection mat (1) comprising the multilayer material of any one of the preceding claims.

6. The fire protection mat (1) according to claim 5, having a thickness from 10 to 20 mm.

7. A transport and storage container assembly (100) comprising:
- a pallet (2),
- an inner container (3) arranged on said pallet (2),
- an outer casing (4) arranged on said pallet (2) and surrounding laterally said inner container (3),
- a fire protection mat (1) arranged between said inner container (3) and said outer casing (4) and between said inner container (3) and said pallet (2),
wherein said fire protection mat (1) comprises:
- a first heat insulation support layer (10) having a first inner surface (10a) and a first outer surface (10b), said first inner surface (10a) facing said inner container (3),
- a second flame barrier layer (20) having a second inner surface (20a) and a second outer surface (20b), said second inner surface (20a) facing said first outer surface (10b), and
- a third electrostatic discharge layer (30) having a third inner surface (30a) and a third outer surface (30b), said third inner surface (30a) facing said second outer surface (20b), a portion of said third outer surface (30b) facing said outer casing (4).

8. The container assembly (100) according to claim 9, wherein:
- said first heat insulation support layer (10) comprises an aerogel material,
- said second flame barrier layer (20) comprises a ceramic foam,
- said third electrostatic discharge layer (30) consists of a material with surface electric resistance lower than 10¹¹ Ω.

9. The container assembly (100) according to claim 7 or 8, wherein said second inner surface (20a) is firmly coupled with said first outer surface (10b) thereby said first heat insulation support layer (10) is firmly coupled with said second flame barrier layer (20).

10. The container assembly (100) according to claim 9, wherein said third inner surface (30a) is firmly coupled with said second outer surface (20b) by deposition or by means of an adhesive composition, thereby said second flame barrier layer (20) is firmly coupled with said third electrostatic discharge layer (30).

11. The container assembly (100) according to any of claims 7-10, wherein the thickness of the fire protection mat (1) is from 10 to 20 mm.

12. The container assembly (100) according to any of claims 7-11, wherein the fire protection mat (1) covers at least five sides of the inner container (3).

13. The container assembly (100) according to any of claims 7-12, wherein said third electrostatic discharge layer (30) consists of a dissipative material with surface electric resistance lower than 10¹¹ Ω and higher than 10⁴ Ω or a conductive material with surface electric resistance lower than 10⁴ Ω.

14. The container assembly (100) according to any of claims 7-13, wherein the thickness of the first heat insulation layer (10) ranges from 10 to 12 mm, the thickness of the second flame barrier layer (20) ranges from 0.5 to 2 mm and the thickness of the third electrostatic discharge layer (30) ranges from 0.1 µm to 10 µm.
